# EUROPEAN PATENT SPECIFICATION

(11) **EP 3 163 099 B1**
(45) Date of publication and mention of the grant of the patent: **24.10.2018**
(21) Application number: 16195896.2
(22) Date of filing: 27.10.2016
(51) Int. Cl.: F16C 1/22, F16C 1/10, F16C 1/18

(54) **DOUBLE-CABLE MOTION TRANSMISSION DEVICE AND METHOD FOR ADJUSTING THE TENSION OF THE CABLES**
ZWEI-ZÜGE VORRICHTUNG UND VERFAHREN ZUR EINSTELLUNG DER ZUGSSPANNUNG
APPAREIL DE TRANSMISSION À DEUX CÂBLES ET MÉTHODE POUR AJUSTER LA TENSION DES CÂBLES

(30) Priority: 29.10.2015 IT UB20155091
(43) Date of publication of application: 03.05.2017
(73) Proprietor: DENSO THERMAL SYSTEMS S.p.A., 10046 Poirino (Torino) (IT)
(72) Inventor: BELLUOMO, Denis, I-10046 POIRINO (Torino) (IT); CARBONE, Andrea, I-10046 POIRINO (Torino) (IT)
(74) Representative: Vanzini, Christian

(56) References cited:
- FR-A- 726 357
- US-A1- 2009 007 708
- US-A1- 2010 192 721

## Description

The present invention relates to a double-cable rotating control assembly comprising a first and a second motion transmission device, both provided with a respective case and a respective rotating pulley carried by the case, and a pair of cables fastened to the rotating pulleys for connecting the actuator devices to each other, the cables being joined to each other by means of a first and a second nipple at each end of the pair of cables, said first and second nipple being housed in respective seats formed on the rotating pulleys of the first and second motion transmitting device respectively.

Control assemblies of this type are commonly known in this field as "pull-pull" controls.

In known assemblies, the tolerances on the free length of the Bowden cables used in them give rise to variations in the transmitted torsional force, in hysteresis during operation, and in the length of the cable itself.

A solution to this problem was proposed in EP 2 759 722, filed by the present applicant. This solution provides for the use of a guide part having a pair of resilient wings whose position relative to the rotating pulley is adjustable. However, it has been found that it may be difficult to place the guide part in the correct position. US 2010/0192721 and US 2009/007708 both disclose an improved double-cable rotating control assembly, however these solutions are affected by tolerances of plastic parts.

One object of the present invention is therefore to provide a control assembly in which the tension of the control cables can be adjusted, and which is also less affected by the tolerances of the plastic parts.

This object is achieved according to the invention by an assembly of the type defined at the outset, in which the pair of cables further comprises a sleeve consisting of an element, separate from the first and second nipple, which surrounds the pair of cables and is placed adjacent to the first nipple and fastened to the seat formed on the rotating pulley of the first motion transmission device, the pair of cables being in a locked condition, in which the pair of cables is made integral with the sleeve in order to provide fastening of the cables to the rotating pulley of the first motion transmission device.

In a control assembly according to the invention, the chain of tolerances of the plastic parts has no effect on the adjustment of the cable tension of the finished product, since the positioning of the cable relative to the sleeve makes it possible to take up and compensate any play, thus always providing the same degree of tension. Additionally, for the purposes of production, it is possible to obtain greater uniformity of characteristics among the finished items, in terms of both torsional force and hysteresis.

A further object of the invention is a method for adjusting the cable tension in a double-cable rotating control assembly, the assembly comprising a first and a second motion transmission device, both provided with a respective case and a respective rotating pulley carried by the case, and a pair of cables fastened to the rotating pulleys for connecting the actuator devices to each other, the cables being joined to each other by means of a first and a second nipple at each end of the pair of cables, said first and second nipple being housed in respective seats formed on the rotating pulleys of the first and second motion transmission device respectively,
in which the pair of cables further comprises a sleeve consisting of an element separate from the first and second nipple, which surrounds the pair of cables and is placed adjacent to the first nipple and fastened to the seat formed on the rotating pulley of the first motion transmission device, the pair of cables being positioned slidably with respect to the sleeve, and
in which the method comprises
fastening the first and second motion transmission device to a fixed implement,
applying a controlled tension to the pair of cables at the first nipple, and
making the pair of cables integral with the sleeve in order to fasten the cables to the rotating pulley of the first motion transmission device.

Preferred embodiments of the invention are defined in the dependent claims, which are to be considered as an integral part of the present description.

Further characteristics and advantages of the assembly according to the invention will be made clearer by the following detailed description of an embodiment of the invention, given with reference to the attached drawings which are provided purely as non-limiting illustrations, in which:
- Figure 1 is a perspective view of a control assembly according to the invention;
- Figure 2 is a view on an enlarged scale of a motion transmission device of the control assembly of Figure 1;
- Figure 3 is a sectional view of the motion transmission device of Figure 2;
- Figure 4 is a schematic perspective view of an apparatus for adjusting the cable tension in the control assembly of Figure 1; and
- Figure 5 is a sectional view similar to Figure 3, showing a step of operation of an adjustment method.

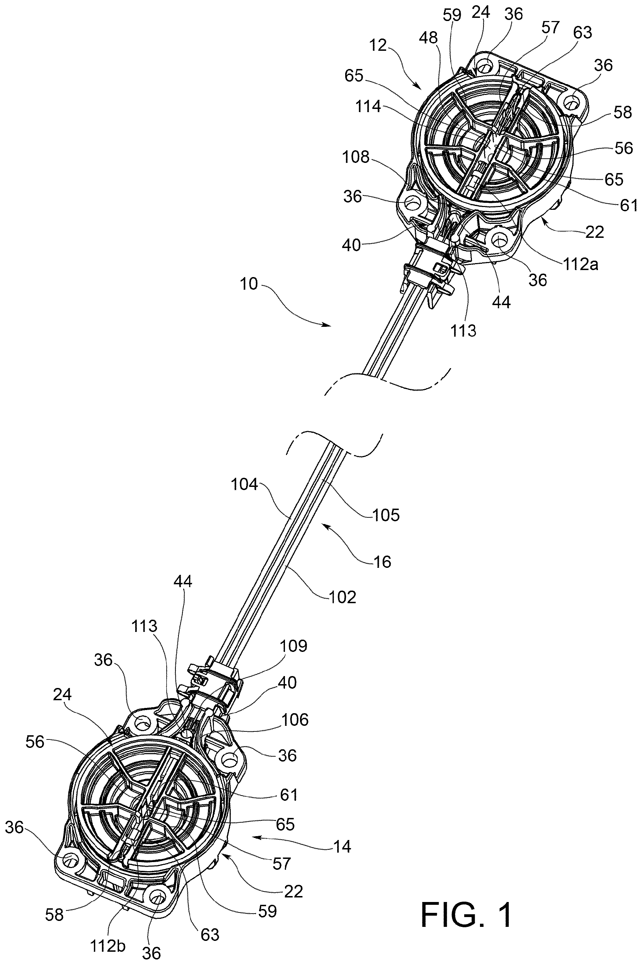

With reference to Figure 1, this shows a double-cable rotating control assembly 10 according to the present invention. The control assembly comprises a first motion transmission device, indicated by 12 in the drawings, and a second motion transmission device similar to the first, indicated by 14, and connected to the first by means of a double-cable flexible transmission 16.

The first and second motion transmission device 12, 14 are adapted to be fastened to respective supports (not shown). For example, one of them could be fastened to a support placed on the dashboard of a vehicle, while the second could be fastened to the casing of an air conditioning and distribution unit. The control assembly 10 may be used, for example, to adjust the temperature of the flow of air admitted into the passenger compartment of the vehicle, or to select the direction of outflow of the air (towards the feet, the front outlets, the side outlets, the defroster, or the like). The assembly 10 may also be used to select the direction of inflow of the air to be conditioned (recirculation or external supply). In general, the control assembly 10 may be used in any application where a device is to be actuated remotely by means of a rotating control.

With reference to Figures 1 to 3, the motion transmission device 12 comprises a case 22 and a pulley 24 mounted rotatably relative to the case 22 about an axis 26. Preferably, both the case 22 and the pulley 24 are made of injection-moulded plastic material.

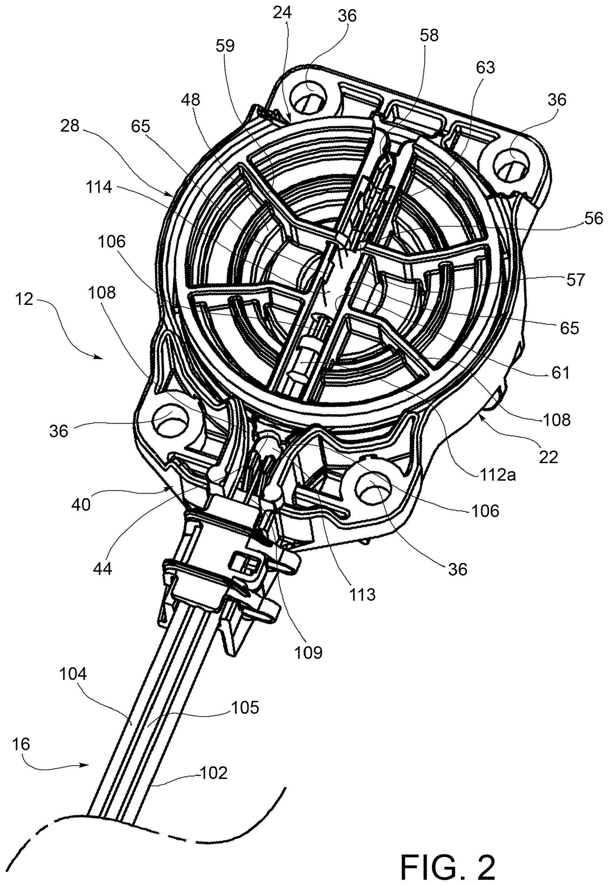

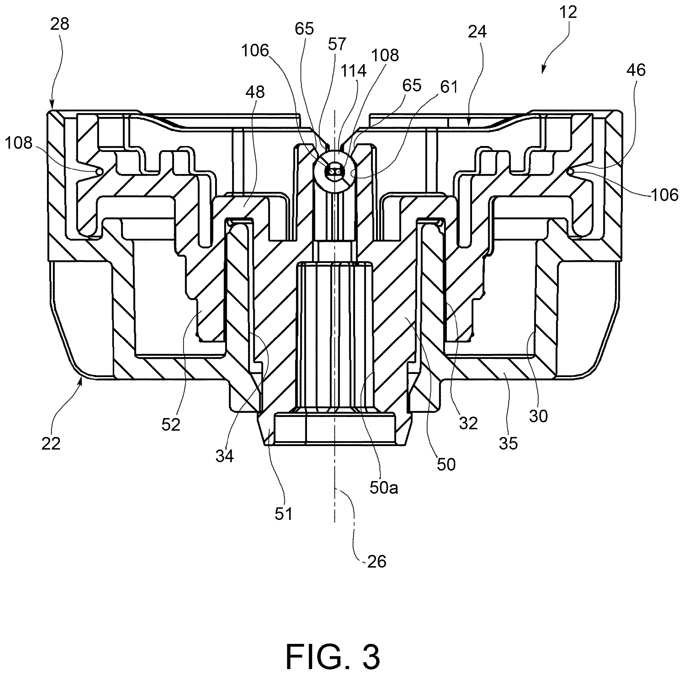

With particular reference to Figures 2 and 3, the case 22 has a front wall 28 on which is formed a circular seat 30, in the centre of which is formed a stem-like part 32 having a through hole 34. The circular seat 30 has a bottom wall 35, which is connected centrally to the stem-like part 32 and is connected peripherally to the rest of the case 22 by means of a lateral wall of the circular seat 30. The case 22 has fastening holes 36 positioned at respective corners of the case 22. The case 22 also has an integral guide portion 40 positioned above the front wall 28. A fastening seat 44 is provided in a median position relative to the guide 40.

The pulley 24 comprises a circumferential groove 46 for winding up the control cables. The pulley 24 has a face 48 having a central hub part 50 extending into the through hole 34. The hub part 50 of the pulley also has a central through hole 50a. The hub part 50 of the pulley 24 also has a free end with a tapered radial projection 51, snap-fitted into the through hole 34 of the case 22. A collar part 52, concentric with the hub part 50, is also formed on the face 48 of the pulley 24, this collar part extending into the circular seat 30 around the stem-like part 32. The pulley 24 bears on the case 22 by means of a part of its face 48 interposed between the hub part 50 and the collar part 52.

A guide 56, extending along a diametral axis of the pulley and communicating with the circumferential groove 46 of the pulley, is also formed on the face 48 of the pulley 24. In the illustrated example, the guide 56 is formed between a pair of transverse walls projecting from the face 48 of the pulley, and has an open end through which the guide 56 communicates with the circumferential groove 46. The guide 56 has a first and a second constriction 57 and 58. In the illustrated example, the first constriction 57 is formed as a slit which is shorter than the guide 56, and is formed in a rib 59 intersecting the walls of the guide 56. The rib 59 is also formed integrally on the face 48 of the pulley. In the illustrated example, the second constriction 58 is formed as a slit which is shorter than the guide 56, and is defined by a thickening of the walls of the guide 56. The first constriction 57 is positioned radially close to the central through hole 50a of the pulley. The second constriction 58 is positioned radially close to the edge of the pulley, at the open end of the guide 56. The first and second constriction create a first and a second fastening seat 61 and 63 respectively. The first fastening seat 61 is positioned next to the central through hole 50a of the pulley and communicates directly with this hole. The second fastening seat 63 is positioned adjacent to the circumferential groove 46 and communicates directly with this groove. The first fastening seat 63 also has a pair of teeth 65 positioned on the side opposite a bottom of the seat 63. In the illustrated example, the teeth 65 are formed on the tops of the walls delimiting the guide 56.

The case 22 and the pulley 24 of the second motion transmission device 14 are identical to the case 22 and the pulley 24 of the first motion transmission device 12 described above. The case 22 and the pulley 24 are configured so that they may be associated equally well with any of the specific components of the two motion transmission devices. The advantages of being able to use the same main components for both devices are considerable, both in terms of the production cost, and in terms of the simplicity of assembling the control assembly.

The flexible transmission 16 comprises a sheath comprising two parallel guides 102, 104 fastened to each other, with respective cables 106, 108 inserted slidably into these guides. Between the aforesaid two guides 102, 104 there is interposed a third guide 105, into which is inserted a fixed cable 109 for the purpose of spacing apart the two devices 12 and 14 and fixing the free length of the cable over time. The slidable cables 106, 108 are inserted into the guide portions 40 of the cases 22 of the first and second motion transmission device, and are wound on to respective portions of the circumferential grooves 46 of the pulleys 24. The opposite ends of the two cables 106, 108 are both fastened, respectively, to a first and a second terminal element or nipple 112a, 112b, which are respectively housed in the first seat 61 of the pulley 24 of the first device 12 and in the second seat 63 of the pulley 24 of the second device 14. The pair of cables 106, 108 further comprises a sleeve 114 consisting of an element separate from the first and second nipple 112a, 112b, which surrounds the pair of cables 106, 108 and is placed adjacent to the first nipple 112a. The sleeve 114 is fastened to the first fastening seat 61 by means of the pair of teeth 65 positioned on the seat 61. During the assembly of the cables to the motion transmission device 12, the sleeve 114 is inserted from above with respect to the seat 61, being pushed towards the bottom of the seat and thus providing a snap-fit coupling when the body of the sleeve passes beyond the constriction formed by the teeth 65.

The third cable 109 is equipped at its ends with its own spherical terminal elements or nipples 113 which are inserted into the seats 44 of the cases 22. The third cable 109 is slidable in the third guide 105 of the sheath placed between the two guides 102, 104 of the sheath.

The cases 22 of the two motion transmission devices are fastened to the respective supports (not shown) by screws or similar fasteners which extend through the holes 36 and engage in corresponding fastening portions provided on these supports.

Evidently, the control assembly described above is made from a very limited number of parts, that is to say two parts for each motion transmission device (the case 22 and the pulley 24), together with the flexible transmission; however, although the number of these parts is limited, they may be positioned and configured in various different ways according to the requirements of applications.

To assemble the flexible transmission 16 to the devices 12 and 14, the second nipple 112b must first be inserted into the second seat 63 of the pulley 24 of the second motion transmission device 14, and the free parts of the cables 106, 108 adjacent thereto are then positioned in the circumferential groove 46 of the pulley 24 and in the guide portion 40 of the case 22. Then, at the other end of the transmission, the free parts of the cables 106, 108 are positioned in the guide portion 40 of the case 22 of the first motion transmission device 12 and in the circumferential groove 46 of the respective pulley 24. The terminal parts of the cables 106, 108 are then inserted into the guide 56 of the pulley 24 of the first motion transmission device 12, and the sleeve 114 is inserted into and fastened in the first seat 61 of this pulley.

The method for adjusting the tension of the cables in the double-cable rotating control assembly described above will now be explained.

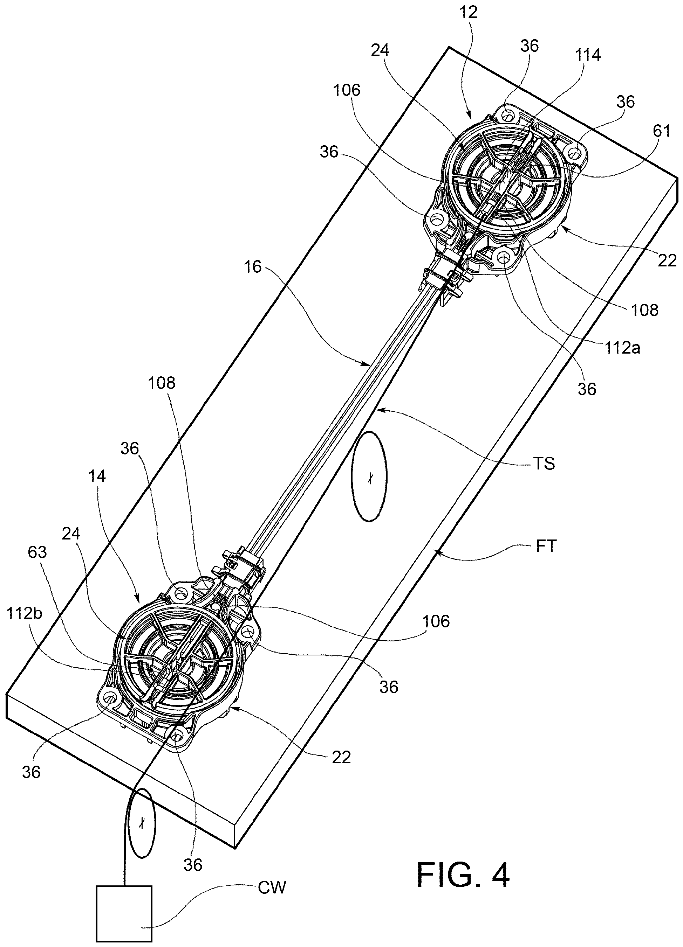

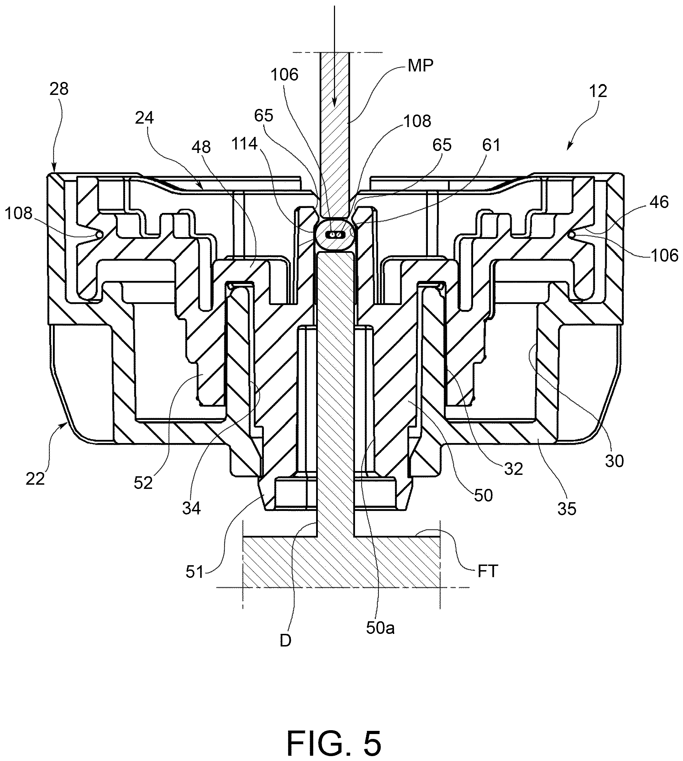

To apply this method, an apparatus shown schematically in Figure 4 and partially in Figure 5 may be provided. This apparatus essentially comprises a fixed implement FT provided to fix the first and second motion transmission device 12, 14, for example by using the fastening holes 36 of the devices and screws that are screwed into corresponding holes formed on the fixed implement FT (this fixed implement may, if necessary, be the same bench on which the control assembly is assembled). The fixed implement also comprises a pin D, shown in Figure 5, which is inserted into the central through hole 50a formed in the pulley 24 of the first motion transmission device 12. The apparatus also comprises a tension system TS, designed to apply a controlled tension to the pair of cables 106, 108 at the first nipple 112a. The tension system TS may, for example, make use of a modular counterweight CW. Finally, the apparatus comprises a movable punch MP, shown in Figure 5.

For the adjustment method, the first and second motion transmission device 12, 14 are first fastened to the fixed implement FT, in such a way that the pin D of the fixed implement FT is inserted into the through hole 50a of the pulley 24 of the first motion transmission device 12. Since the sleeve 114 is positioned next to the central through hole 50a of the pulley 24 and communicates with the first seat 61, the sleeve 114 is therefore in contact with the pin, or is at least exposed to it. In this condition before the adjustment, the pair of cables 106, 108 is in a free condition, in which the pair of cables 106, 108 is positioned slidably relative to the sleeve 114.

By means of a tension system TS, a controlled tension is then applied to the pair of cables 106, 108, at the first nipple 112a. By adjusting the counterweight CW, a desired degree of tension may be imparted to the cables 106, 108. As a result of the tension, the second nipple 112b bears against an abutment surface formed by the second constriction 58 of the guide 56 of the pulley 24 of the second motion transmission device 14; at the other end of the assembly, the cables 106, 108 slide within the sleeve 114, which is locked by the action of the teeth 65 at the abutment surface formed by the first constriction 57 of the guide 56 of the pulley 24 of the first motion transmission device 12.

The pair of cables 106, 108 is then made integral with the sleeve 114 in order to fasten the cables 106, 108 to the rotating pulley 24 of the first motion transmission device 12. For this purpose, a plastic deformation is applied to the sleeve 114. This plastic deformation is produced by pressing the sleeve 114 by means of the punch MP against the pin D.

The cables are then in a locked condition, and the tension established in them by the adjustment system TS is then maintained by the gripping action of the sleeve 114 (already locked to the rotating pulley 24 of the first motion transmission device 12) on the cables 106, 108. The tension system TS may then be removed and the control assembly is ready for use. Since the sleeve 114 ensures the locking of the cables 106, 108 to the pulley 24 of the first motion transmission device 12, the first nipple 112a released by the tension system TS may be inserted into the same seat 61 that receives the sleeve 114, and may be fastened thereto, for example, by an interference fit with the lateral walls of the guide 56 of the pulley 24.

## Claims

1. A double-cable rotating control assembly comprising a first and a second motion transmitting device (12, 14), both provided with a respective case (22) and a respective rotating pulley (24) carried by the case (22), and a pair of cables (106, 108) fastened to the rotating pulleys (24) for connecting the motion transmitting devices (12, 14) to each other, the cables being joined to each other by means of a first and a second nipple (112a, 112b) at each end of the pair of cables (106, 108), said first and second nipple being housed in respective seats (61, 63) formed on the rotating pulleys (24) of the first and second motion transmitting device (12, 14), respectively,
**characterized in that** the pair of cables (106, 108) further comprises a sleeve (114) consisting of an element separate from the first and second nipple (112a, 112b) which surrounds the pair of cables (106, 108) and is arranged adjacent to the first nipple (112a) and fastened to the seat (61) formed on the rotating pulley (24) of the first motion transmitting device (12), the pair of cables (106, 108) being in a locked condition, wherein the pair of cables (106, 108) is made integral to the sleeve (114) in order to provide fastening of the cables (106, 108) to the rotating pulley (24) of the first motion transmitting device (12).

2. An assembly according to claim 1, wherein the pair of cables (106, 108) is made integral to the sleeve (114) by means of plastic deformation of the sleeve.

3. An assembly according to claim 1 or 2, wherein the sleeve (114) is arranged at a central through cavity (50a) axially extending through the rotating pulley (24) of the first motion transmitting device (12) and communicating with the seat (61) in which the sleeve (114) is arranged.

4. An assembly according to any of the preceding claims, wherein a circumferential groove (46) for winding up the cables and a guide (56) for cable ends are formed in each pulley (24), said guide extending along a diameter axis of the pulley (24) and communicating with the circumferential groove (46), said guide having a first and a second throttling (57, 58) adapted to provide an abutment surface for the sleeve (114) and second nipple (112b), respectively.

5. An assembly according to any of the preceding claims, wherein the seat (61) in which the sleeve (114) is arranged has teeth (65) arranged on the opposite side with respect to a bottom of the seat (61), said teeth being provided for fastening the sleeve (114) to the seat (61).

6. A method for tuning cable tension in a double-cable rotating control assembly, the assembly comprising a first and a second motion transmitting device (12, 14) both provided with a respective case (22) and a respective rotating pulley (24) carried by the case (22), and a pair of cables (106, 108) fastened to the rotating pulleys (24) for connecting the motion transmitting devices to each other, the cables (106, 108) being joined to each other by means of a first and a second nipple (112a, 112b) at each end of the pair of cables (106, 108), said first and second nipple being housed in respective seats (61, 63) formed on the rotating pulleys (24) of the first and second motion transmitting device (12, 14), respectively,
**characterized in that** the pair of cables (106, 108) further comprises a sleeve (114) consisting of an element separate from the first and second nipple (112a, 112b), which surrounds the pair of cables (106, 108) and is arranged adjacent to the first nipple (112a) and fastened to the seat (61) formed on the rotating pulley (24) of the first motion transmitting device (12), the pair of cables (106, 108) being slidably arranged with respect to the sleeve (114), and
**in that** the method comprises
fastening the first and second motion transmitting device (12, 14) to a fixed tool (FT),
applying a controlled tension to the pair of cables (106, 108), at the first nipple (112a), and
making the pair of cables (106, 108) integral to the sleeve (114) in order to provide a fastening of the cables (106, 108) to the rotating pulley (24) of the first motion transmitting device (12).

7. A method according to claim 6, wherein making the pair of cables (106, 108) integral to the sleeve (114) comprises
plastically deforming the sleeve (114).

8. A method according to claim 6 or 7, wherein the sleeve (114) is arranged at a central through cavity (50a) axially extending through the rotating pulley (24) of the first motion transmitting device (12) and communicating with the seat (61) in which the sleeve (114) is arranged, wherein the fixed tool (FT) comprises a pin (D) inserted into the central through cavity (50a), and wherein making the pair of cables (106, 108) integral to the sleeve (114) comprises
pressing the sleeve (114) against the pin (D).

9. A method according to any of claims 6 to 8, wherein the seat (61) in which the sleeve (114) is arranged has teeth (65) arranged on the opposite side with respect to a bottom of the seat (61), and provided for fastening the sleeve (114) to the seat (61).

10. Apparatus configured for implementing a tuning method according to any of claims 6 to 9.

## Patentansprüche

1. Doppelkabel-Drehsteuerbaueinheit, mit einer ersten und einer zweiten Bewegungsübertragungseinrichtung (12, 14), die beide mit einem entsprechenden Gehäuse (22) und einer entsprechenden Drehriemenscheibe (24), die von dem Gehäuse (22) getragen wird, und einem Paar von Kabeln (106, 108), die an den Drehriemenscheiben (24) zum Verbinden der Bewegungsübertragungseinrichtungen (12, 14) miteinander befestigt sind, versehen sind, wobei die Kabel miteinander mittels eines ersten und eines zweiten Nippels (112a, 112b) an jedem Ende des Paares von Kabeln (106, 108) verbunden sind, wobei der erste und der zweite Nippel in entsprechenden Sitzen (61, 63), die auf den Drehriemenscheiben (24) der ersten bzw. der zweiten Drehübertragungseinrichtung (12, 14) ausgebildet sind, aufgenommen sind,
**dadurch gekennzeichnet, dass** das Paar von Kabeln (106, 108) ferner eine Hülse (114) aufweist, die aus einem von dem ersten und dem zweiten Nippel (112a, 112b) getrennten Element besteht, das das von Paar von Kabeln (106, 108) umgibt und an den ersten Nippel (112a) angrenzend angeordnet ist und an dem Sitz (61), der auf der Drehriemenscheibe (24) der ersten Bewegungsübertragungseinrichtung (12) ausgebildet ist, befestigt ist, wobei das Paar von Kabeln (106, 108) sich in einem verriegelten Zustand befindet, bei dem das Paar von Kabeln (106, 108) integral mit der Hülse (114) ausgebildet ist, um ein Befestigen der Kabel (106, 108) an der Drehriemenscheibe (24) der ersten Bewegungsübertragungseinrichtung (12) vorzusehen.

2. Baueinheit, nach Anspruch 1, bei der das Paar von Kabeln (106, 108) integral mit der Hülse (114) mittels Kunststoffverformung der Hülse hergestellt ist.

3. Baueinheit nach Anspruch 1 oder 2, bei der die Hülse (114) in der Mitte angeordnet ist durch eine Aussparung (50a), die sich axial durch die Drehriemenscheibe (24) der ersten Bewegungsübertragungseinrichtung (12) erstreckt und mit dem Sitz (61) in Verbindung steht, in dem die Hülse (114) angeordnet ist.

4. Baueinheit nach einem der vorhergehenden Ansprüche, bei der eine Umfangsnut (46) zum Aufwickeln der Kabel und eine Führung (56) für Kabelenden in jeder Riemenscheibe (24) ausgebildet sind, wobei die Führung sich entlang einer Durchmesserachse der Riemenscheibe (24) erstreckt und mit der Umfangsnut (46) in Verbindung steht, wobei die Führung eine erste und eine zweite Drosselung (57, 58) aufweist, die angepasst sind zum Vorsehen einer Anlagefläche für die Hülse (114) bzw. den zweiten Nippel (112b).

5. Baugruppe nach einem der vorhergehenden Ansprüche, bei der der Sitz (61), in dem die Hülse (114) angeordnet ist, Zähne (65) aufweist, die auf der gegenüberliegenden Seite mit Bezug auf einen Boden des Sitzes (61) angeordnet sind, wobei die Zähne zum Befestigen der Hülse (114) an dem Sitz (61) vorgesehen sind.

6. Verfahren zum Einstellen einer Kabelspannung in einer Doppelkabel-Drehsteuerbaueinheit, wobei die Baueinheit eine erste und eine zweite Bewegungsübertragungseinrichtung (12, 14) aufweist, die beide mit einem entsprechenden Gehäuse (22) und einer entsprechenden Drehriemenscheibe (24), die von dem Gehäuse (22) getragen wird, und einem Paar von Kabeln (106, 108), die an den Drehriemenscheiben (24) zum Verbinden der Bewegungsübertragungseinrichtungen (12, 14) miteinander befestigt sind, wobei die Kabel miteinander mittels eines ersten und zweiten Nippels (112a, 112b) an jedem Ende des Paares von Kabeln (106, 108) verbunden sind, wobei der erste und der zweite Nippel in entsprechenden Sitzen (61, 63) aufgenommen sind, die auf den Drehriemenscheiben (24) der ersten bzw. der zweiten Drehübertragungseinrichtung (12, 14) ausgebildet sind,
**dadurch gekennzeichnet, dass** das Paar von Kabeln (106, 108) ferner eine Hülse (114) aufweist, die aus einem von dem ersten und dem zweiten Nippel (112a, 112b) getrennten Element besteht, das das von Paar von Kabeln (106, 108) umgibt und an den ersten Nippel (112a) angrenzend angeordnet ist und an dem Sitz (61) befestigt ist, der auf der Drehriemenscheibe (24) der ersten Bewegungsübertragungseinrichtung (12) ausgebildet ist, wobei das Paar von Kabeln (116, 108) gleitbar mit Bezug auf die Hülse (114) angeordnet ist, und
dass das Verfahren aufweist
Befestigen der ersten und der zweiten Bewegungsübertragungseinrichtung (12, 14) an einem festen Werkzeug (FT),
Aufbringen einer gesteuerten Zugkraft auf das Paar von Kabeln (106, 108) an dem ersten Nippel (112a), und
Herstellen des Paars von Kabeln (106, 108) integral mit der Hülse (114) zum Vorzusehen eines Befestigens der Kabel (106, 108) an der Drehriemenscheibe (24) der ersten Bewegungsübertragungseinrichtung (12).

7. Verfahren nach Anspruch 6, bei dem das Herstellen des Paars von Kabeln (106, 108) integral mit der Hülse (114) aufweist
plastisches Verformen der Hülse (114).

8. Verfahren nach Anspruch 6 oder 7, bei dem die Hülse (114) in einer Mitte angeordnet ist durch eine Aussparung (50a), die sich axial durch die Drehriemenscheibe (24) der ersten Bewegungsübertragungseinrichtung (12) erstreckt und die mit dem Sitz (61) in Verbindung steht, in dem die Hülse (114) angeordnet ist, bei dem das feste Werkzeug (FT) einen Stift (D) aufweist, der in die mittige Durchgangsaussparung (50a) eingeführt ist, und bei dem das Herstellen des Paars von Kabeln (106, 108) integral mit der Hülse (114) aufweist
Pressen der Hülse (114) gegen den Stift (D).

9. Verfahren nach einem der Ansprüche 6 bis 8, bei dem der Sitz (61), in dem die Hülse (114) angeordnet ist, Zähne (65) aufweist, die auf der gegenüberliegenden Seite mit Bezug auf einem Boden des Sitzes (61) angeordnet sind und die zum Befestigen der Hülse (114) an dem Sitz (61) vorgesehen sind.

10. Vorrichtung, die zum Implementieren eines Einstellverfahrens nach einem der Ansprüche 6 bis 9 ausgebildet ist.

## Revendications

1. Ensemble de commande rotative à double câble comprenant un premier et un second dispositif de transmission de mouvements (12, 14), comprenant tous deux un boîtier respectif (22) et une poulie rotative respective (24) portée par le boîtier (22), et une paire de câbles (106, 108) fixée aux polies rotatives (24) pour connecter les dispositifs de transmission de mouvements (12, 14) l'un à l'autre, les câbles étant reliés l'un à l'autre au moyen d'un premier et d'un second raccord (112a, 112b) à chaque extrémité de la paire de câbles (106, 108), lesdits premier et second raccords étant logés dans des assises respectives (61, 63) formées sur les poulies rotatives (24) des premier et second dispositifs de transmission de mouvements (12, 14), respectivement,
**caractérisé en ce que** la paire de câbles (106, 108) comprend en outre une gaine (114) comprenant un élément séparé des premier et second raccords (112a, 112b) qui entoure la paire de câbles (106, 108) et est agencé de manière adjacente au premier raccord (112a) et fixé à l'assise (61) formée sur la poulie rotative (24) du premier dispositif de transmission de mouvements (12), la paire de câbles (106, 108) étant dans un état verrouillé, dans lequel la paire de câbles (106, 108) fait partie intégrante de la gaine (114) afin d'assurer une fixation des câbles (106, 108) à la poulie rotative (24) du premier dispositif de transmission de mouvements (12).

2. Ensemble selon la revendication 1, dans lequel la paire de câbles (106, 108) fait partie intégrante de la gaine (114) au moyen d'une déformation plastique de la gaine.

3. Ensemble selon la revendication 1 ou 2, dans lequel la gaine (114) est agencée au niveau d'une cavité traversante centrale (50a) s'étendant axialement à travers la poulie rotative (24) du premier dispositif de transmission de mouvements (12) et communiquant avec l'assise (61) dans laquelle la gaine (114) est agencée.

4. Ensemble selon l'une quelconque des revendications précédentes, dans lequel une rainure circonférentielle (46) pour enrouler les câbles et un guide (56) pour des extrémités de câble sont formés dans chaque poulie (24), ledit guide s'étendant le long d'un axe diamétral de la poulie (24) et communiquant avec la rainure circonférentielle (46), ledit guide ayant un premier et un second étranglement (57, 58) adaptés à fournir une surface de butée pour la gaine (114) et le second raccord (112b), respectivement.

5. Ensemble selon l'une quelconque des revendications précédentes, dans lequel l'assise (61) dans laquelle la gaine (114) est arrangée a des dents (65) agencées sur le côté opposé par rapport à un fond de l'assise (61), lesdites dents étant fournies pour fixer la gaine (114) à l'assise (61).

6. Procédé de mise au point de tension dans un ensemble de commande rotative à double câble, le procédé comprenant un premier et un second dispositif de transmission de mouvements (12, 14) comprenant tous deux un boîtier respectif (22) et une poulie rotative respective (24) portée par le boîtier (22), et une paire de câbles (106, 108) fixée aux poulies rotatives (24) pour connecter les dispositifs de transmission de mouvements l'un à l'autre, les câbles (106, 108) étant reliés l'un à l'autre au moyen d'un premier et d'un second raccord (112a, 112b) à chaque extrémité de la paire de câbles (106, 108), lesdits premier et second raccords étant logés dans des assises respectives (61, 63) formées sur les poulies rotatives (24) des premier et second dispositifs de transmission de mouvements (12, 14), respectivement,
**caractérisé en ce que** la paire de câbles (106, 108) comprend en outre une gaine (114) comprenant un élément séparé des premier et second raccords (112a, 112b), qui entoure la paire de câbles (106, 108) et est agencé de manière adjacente au premier raccord (112a) et fixé à l'assise (61) formée sur la poulie rotative (24) du premier dispositif de transmission de mouvements (12), la paire de câbles (106,108) étant agencée de manière coulissante par rapport à la gaine (114), et
**en ce que** le procédé comprend
la fixation des premier et second dispositifs de transmission de mouvements (12, 14) à un outil fixe (FT),
l'application d'une tension contrôlée à la paire de câbles (106, 108), au niveau du premier raccord (112a), et
l'intégration de la paire de câbles (106, 108) à la gaine (114) afin d'assurer une fixation des câbles (106, 108) à la poulie rotative (24) du premier dispositif de transmission de mouvements (12).

7. Procédé selon la revendication 6, dans lequel l'intégration de la paire de câbles (106, 108) à la gaine comprend
la déformation plastique de la gaine (114).

8. Procédé selon la revendication 6 ou 7, dans lequel la gaine (114) est agencée au niveau d'une cavité traversante centrale (50a) s'étendant axialement à travers la poulie rotative (24) du premier dispositif de transmission de mouvements (12) et communiquant avec l'assise (61) dans laquelle la gaine (114) est agencée, dans lequel l'outil fixe (FT) comprend une goupille (D) insérée dans la cavité traversante centrale (50a), et dans lequel l'intégration de la paire de câbles (106, 108) à la gaine (114) comprend
le pressage de la gaine (114) contre la goupille (D).

9. Procédé selon l'une quelconque des revendications 6 à 8, dans lequel l'assise (61) dans laquelle la gaine (114) est arrangée a des dents (65) agencées sur le côté opposé par rapport à un fond de l'assise (61), et fournies pour la fixation de la gaine (114) à l'assise (61).

10. Appareil configuré pour mettre en oeuvre un procédé de mise au point selon l'une quelconque des revendications 6 à 9.
